# FASCICULE DE BREVET EUROPEEN

(11) **EP 0 876 209 B1**
(45) Date de publication et mention de la délivrance du brevet: **21.05.2003**
(21) Numéro de dépôt: 96937378.6
(22) Date de dépôt: 31.10.1996
(51) Int. Cl.: B01J 20/04, C02F 1/52, B01J 20/32

(54) **AGENT D'ELIMINATION DES METAUX LOURDS COMPRENANT UN COMPOSE SOUFRE**
ENTFERNUNGSMITTEL FÜR SCHWERMETALLE ENTHALTEND EINE SCHWEFELVERBINDUNG
HEAVY METAL REMOVAL AGENT CONTAINING A SULPHUR COMPOUND

(30) Priorité: 31.10.1995 FR 9512974
(43) Date de publication de la demande: 11.11.1998
(73) Titulaire: RHODIA CHIMIE, 92408 Courbevoie Cédex (FR)
(72) Inventeur: CHANE-CHING, Jean-Yves, F-95600 Eaubonne (FR); DRENO, Anne-Gaelle, F-75018 Paris (FR); KIEFER, Jean-Claude Lot. Le Grand-Caillouet, F-60460 Précy-sur-Oise (FR)
(74) Mandataire: Delenne, Marc
(86) Numéro de dépôt international: FR9601718
(87) Numéro de publication internationale: WO97016248

(56) Documents cités:
- EP-A- 0 102 044
- EP-A- 0 292 083
- EP-A- 0 496 432
- WO-A-92/09530
- FR-A- 2 080 451
- US-A- 4 452 768

## Description

La présente invention concerne un agent d'élimination de métaux lourds contenus dans un milieu, notamment un effluent aqueux.

L'incinération des déchets est soumise à un cadre réglementaire assez strict.

La législation dans le domaine des rejets des métaux lourds, dans le milieu naturel, est en particulier en pleine évolution. Les eaux de lavage (ou d'épuration) des fumées d'usines d'incinération d'ordures ménagères ou de déchets industriels, notamment d'effluents industriels du type acides sutfuriques usés, sont des milieux contenant des métaux lourds. De même, certains sols sont pollués par la présence de tels métaux.

Ainsi, dans le domaine des eaux de lavage des fumées d'usines d'incinération d'ordures ménagères, le procédé le plus connu d'élimination des métaux lourds consiste en une précipitation basique effectuée à la chaux ; l'étape de décantation/séparation qui suit est généralement améliorée par l'incorporation d'un agent floculant

Mais ce procédé présente un certain nombre d'inconvénients.

En particulier, un volume très important de boue est généré par la précipitation à la chaux ; cette boue, après filtration et compaction sous forme de galette, doit être actuellement placée dans des décharges particulières.

De plus, la composition de boue obtenue peut être difficile à stabiliser (ou immobiliser) par les techniques actuelles. La présence de calcium en quantité importante dans cette boue peut inhiber fortement les opérations de stabilisation (ou immobilisation), comme par exemple la stabilisation par vitrification. Or, les futures réglementations relatives au stockage des déchets spéciaux ultimes rendent nécessaire la stabilisation (ou immobilisation) de la galette, avant admission sur le site de stockage, afin de réduire très sensiblement la lixiviation de ce type de déchet.

Enfin, l'élimination des métaux lourds du type mercure à l'aide des procédés classiques s'avère le plus souvent difficile, voire impossible.

EP-A-0102044 décrit l'emploi d'une composition comprenant un thiolate et un silicate gonflant comme une argile minérale de type smectite, kaolinite ou zéolite, pour l'élimination de métaux lourds de solutions diluées.

Dans US-A-4452768 est mentionnée l'utilisation d'un adsorbant et d'un ester d'acide dithiophosphorique pour l'élimination d'ions cadmium, cuivre, plomb et mercure.

EP-A-0535757 décrit un agent d'élimination de métaux lourds comprenant un ciment, une argile et un composé soufré.

La présente invention a notamment pour but de fournir un moyen permettant une élimination (ou captation) efficace des métaux lourds, et en particulier du mercure, et ne présentant pas les inconvénients sus-mentionnés.

A cet effet, la présente invention propose l'utilisation, pour l'élimination (ou captation) ou la stabilisation (ou immobilisation) de métaux lourds présents dans un milieu, d'un agent qui est un produit mixte comprenant dans des proportions particulières (i) au moins un composé du type silicate au moins un composé du type carbonate, (ii) au moins un composé soufré, et, en général, (iii) au moins un support, de préférence une argile.

Elle concerne aussi l'utilisation dudit agent pour l'élimination de métaux lourds, en particulier du mercure, contenus dans un effluent aqueux.

La Demanderesse a trouvé, de manière surprenante, que l'utilisation d'un agent d'élimination de métaux lourds tel que défini précédemment, en particulier quand il comprend à la fois un composé du type silicate ou aluminosilicate et un composé du type carbonate, permettait une élimination très efficace des métaux lourds du milieu les contenant, et, parmi eux, du mercure, et, de manière avantageuse, une amélioration de la décantation et de la séparation boue obtenue / sumageant liquide, une certaine amélioration de l'aptitude à la stabilisation de cette boue, c'est-à-dire une certaine amélioration de l'aptitude de celle-ci à la résistance à la lixiviation et une diminution de la teneur résiduelle en calcium du précipité par rapport à ce qui est obtenu avec le procédé à la chaux décrit précédemment.

Ainsi, l'objet de l'invention est l'utilisation pour l'élimination (ou captation) ou la stabilisation de métaux lourds contenus dans un milieu, d'un agent comprenant:
- au moins un composé du type silicate , appelé ci-après composé (A), et au moins un composé du type carbonate, appelé ci-après composé (B),
- au moins un composé soufré, appelé ci-après composé (C), et
- et, éventuellement, au moins un support,

le rapport en poids composé (B)/composé (A) étant compris entre 0,5 et 4,0 et la teneur dudit agent en composé (C) étant comprise entre 0,01 et 5% en poids.

Par métaux lourds, on entend en particulier les métaux de valence supérieure ou égale à 2, de préférence égale à 2, et notamment ceux choisis parmi l'antimoine, l'arsenic, le bismuth, le cadmium, le chrome, le cobalt, le cuivre, l'étain, le manganèse, le mercure, le molybdène, le nickel, l'or, le plomb, le thallium, le tungstène, le zinc, le fer, les métaux de la famille des actinides.

Les métaux lourds particulièrement visés par la présente invention sont le chrome, le cuivre, le nickel, le fer, et, à un degré supérieur, le cadmium, le mercure, le plomb, te zinc.

L'agent est avantageusement utilisé lorsque le milieu à traiter contient, à titre de métaux lourds, au moins du mercure.

Les métaux lourds à éliminer se trouvent habituellement sous la forme d'ions, en particulier sous la forme de leurs cations respectifs (par exemple Cr³⁺, Cu²⁺, Ni²⁺, Fe²⁺, Fe³⁺, Cd²⁺, Hg²⁺, Pb²⁺, Zn²⁺).

Le milieu à traiter est de préférence liquide.

Ce milieu peut être ainsi constitué par un effluent aqueux, notamment un effluent aqueux industriel (c'est-à-dire un effluent aqueux provenant d'un procédé industriel).

Ce milieu peut être par exemple un effluent aqueux formé par les eaux de lavage (ou d'épuration) des fumées d'incinération de déchets, notamment d'ordures ménagères, de déchets industriels, de déchets hospitaliers, par les eaux de lavage de matière solide, comme de la terre, contenant des métaux lourds, par des effluents aqueux de traitement de surface.

Le produit mixte pour éliminer les métaux lourds d'un milieu selon l'invention, utilisable pour purifier ledit milieu, peut être considéré, lorsqu'il contient au moins un support, comme un produit composite formé :
- d'au moins un principe actif (ou agent de précipitation) constitué par :
   . au moins un composé (A) du type silicate et au moins un composé (B) du type carbonate, et
   . au moins un composé soufré (C) ; et
- d'au moins un support (ou substrat), de préférence constitué par au moins une argile.

Le composé (A) est, un silicate de métal alcalin, en particulier de sodium ou de potassium.

Le composé (A) est avantageusement un silicate de sodium. Ledit silicate de sodium présente alors en général un rapport molaire SiO₂/Na₂O compris entre 0,5 et 3,8, par exemple égal à environ 2.

Le composé (B) est, un carbonate de métal alcalin ou un hydroxycarbonate choisi parmi l'hydrotalcite et la dawsonite.

L'hydrotalcite est un carbonate basique de magnésium et d'aluminium. La dawsonite est un carbonate basique d'aluminium et de sodium

De manière avantageuse, le composé (B) est un carbonate de métal alcalin, préférentiellement de sodium. .

Dans l'agent utilisé selon l'invention, le rapport en poids composé (B) / composé (A) est compris entre 0,5 et 4,0, de préférence entre 1,1 et 3,5, notamment entre 1,5 et 2,5.

Le support éventuellement contenu dans l'agent utilisé selon l'invention est, de manière préférée, une argile.

L'argile alors contenue dans l'agent peut être d'origine naturelle ou synthétique.

L'argile ainsi employée présente avantageusement une teneur pondérale élevée en Al₂O₃ ; cette teneur est par exemple comprise entre 20 et 40 %.

On peut mettre en oeuvre, selon l'invention, une argile de structure lamellaire ou phyllosilicate.

On peut ainsi utiliser une argile choisie dans le groupe comprenant les kaolinites, les serpentines.

L'argile peut également être choisie dans le groupe comprenant les montmorillonites, les bentonites (en particulier alcalines), le talc, le mica.

De préférence, l'argile choisie appartient à l'un de ces deux groupes.

On peut éventuellement employer une argile de structure type chlorite.

L'agent utilisé selon l'invention contient en général, à titre d'argile, une montmorillonite ou une bentonite.

La teneur en support, en particulier en argile, de l'agent utilisé selon l'invention est habituellement comprise entre 5 et 90 % en poids, par exemple entre 10 et 35 % en poids, par rapport au poids total dudit agent.

La présence ou non d'un support, en particulier d'une argile, dans l'agent utilisé selon l'invention dépend essentiellement de la nature du composé (C).

Le composé (C) contenu dans l'agent employé selon l'invention peut être un composé soufré minéral.

En général, l'agent empolyé selon l'invention ne contient pas alors de support, en particulier d'argile.

A titre de composé soufré minéral, on peut employer un sulfure minéral, en particulier un sulfure de baryum (BaS) ou de strontium (SrS), ou, de préférence, un (poly)thiocarbonate minéral, notamment un (poly)thiocarbonate de métal alcalin, par exemple de potassium ou de sodium. On peut ainsi utiliser tout sel de l'acide thiocarbonique, comme le thiocarbonate de potassium (K₂CS₃).

Le composé (C) contenu dans l'agent utilisé selon l'invention est, de manière préférée, un composé soufré organique (ou composé dit organosoufré).

L'agent utilisé selon l'invention contient alors préférentiellement au moins un support, en particulier une argile.

A titre de composé soufré organique, on peut utiliser un organothiophosphate ou un organodithiophosphate, en particulier un dialkyl- ou diaryl-dithiophosphate de métal alcalin, par exemple de sodium.

Les dialkyl- ou diaryl-dithiophosphates de métal alcalin utilisables répondent notamment à la formule suivante : 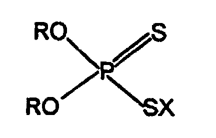 dans laquelle X est un métal alcalin, par exemple le sodium, R est un radical aryle ou, de préférence, alkyle, par exemple, méthyle, éthyle, n-propyle, isopropyle, méthyl-1 propyle, isobutyle.

A titre de composé soufré organique, on peut employer, de préférence, un composé (poly)mercapto, notamment un composé mercapto, dimercapto ou trimercapto. Ce composé soufré organique peut alors être une triazine (par exemple une triazine-as ou, de préférence, une triazine-S), substituée par 1, 2 ou 3 radicaux monovalents -SH.

Plus particulièrement, ce composé soufré organique est la trimercapto triazine-S, qui répond à la formule suivante :

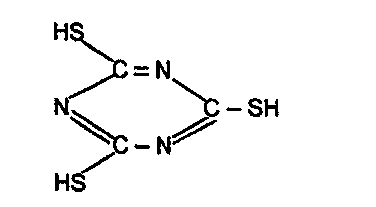

Le composé soufré (C) est préférentiellement localisé, dans le support, au coeur de l'agent employé selon l'invention.

Cette localisation au coeur du produit mixte utilisé selon l'invention permet notamment une dissolution retardée du composé soufré (C) lors de l'utilisation dudit produit mixte dans un milieu liquide ; la Demanderesse a constaté que la dissolution du composé soufré (C) se produit avec un certain retard par rapport aux dissolutions des constituants (A) du type silicate et (B) du type carbonate.

Cette dissolution retardée présente notamment l'avantage de réduire la quantité nécessaire de composé soufré dans l'agent utilisé selon l'invention.

Le produit mixte constitué par l'agent utilisé selon l'invention se présente habituellement sous forme de granulés (co-granulés) ou poudre, dont la taille des grains est de préférence comprise entre 0,1 et 2,0 mm, en particulier entre 0,2 et 1,6 mm.

De manière générale, l'agent utilisé selon l'invention présente une teneur pondérale en eau libre (ou humidité) comprise entre 10 et 30 %, de préférence entre 15 et 25 %. Cette teneur en eau peut être déterminée par la mesure de perte de masse par calcination à 350 °C pendant 6 heures.

La teneur en composé soufré (C) de l'agent employé selon l'invention est comprise entre 0,01 et 5 %, en particulier entre 0,1 et 4 %, en poids ; elle est de préférence comprise entre 0,4 et 3 %, par exemple entre 0,5 et 2 %, en poids.

L'agent utilisé selon l'invention est préparé par tout procédé adéquat, permettant de préférence d'introduire le composé soufré au coeur de ce produit mixte.

Un procédé particulièrement préféré lorsque l'on souhaite préparer un agent contenant un support, tel qu'une argile, va être décrit ci-dessous.

On incorpore d'abord le composé soufré (C) au coeur du support

Pour cela, on additionne, généralement sous agitation, à un support, en particulier une argile, préalablement introduit dans un granulateur, de préférence un granulateur mélangeur, une solution aqueuse du composé soufré (C). La granulation peut s'effectuer à l'aide d'un granulateur à assiettes ou d'un granulateur de type Lodige.

La granulation est ensuite complétée par un séchage en lit fluide, de préférence à une température comprise entre 40 et 100 °C, en général à une valeur maintenue constante pendant un certain temps après une montée en température. Cette température peut être comprise entre 40 et 70 °C, par exemple entre 45 et 55 °C. Elle peut aussi être comprise entre 70 et 100 °C, notamment entre 85 et 95 °C.

La dissolution retardée du composé soufré (C) lors de l'utilisation de l'agent selon l'invention dans un milieu liquide est également due, en général, à ce traitement thermique. La température du traitement thermique peut constituer un moyen de maîtriser la cinétique de dissolution du composé soufré (C).

Le produit séché obtenu, sous forme de granulés, peut être ensuite broyé (afin de réaliser notamment un démottage desdits granulés) et, éventuellement, tamisé (avec, par exemple, récupération uniquement de la fraction des granulés de taille inférieure à 400 µm, voire à 200 µm).

Suite à cette incorporation du composé soufré (C) au coeur du support, les composés (A) et (B) doivent être ajoutés, et ce, de manière avantageuse, par les méthodes préférées suivantes.

Selon un premier mode de réalisation, on mélange le produit obtenu précédemment (support + composé soufré (C)) à une solution aqueuse du composé (A) (respectivement (B)) ou à une solution aqueuse du composé (A) et du composé (B), préférentiellement par pulvérisation, en particulier à une pression de pulvérisation comprise entre 5 et 15 bars, de ladite solution sur ledit produit, préalablement introduit dans un granulateur (par exemple celui utilisé auparavant), de préférence un granulateur mélangeur, et génaralement sous agitation ; la granulation peut s'effectuer à l'aide d'un granulateur à assiettes ou d'un granulateur de type Logide.

Cette étape de mélange (pulvérisation en particulier) peut être suivie d'un séchage en lit fluide, dans des conditions telles qu'indiquées précédemment (mais, en général, à une température inférieure (par exemple entre 30 et 40 °C)), puis d'un mélange avec une solution aqueuse du composé (B) (respectivement (A)) ou d'une solution aqueuse du composé (A) et du composé (B), mélange consistant de préférence en une pulvérisation de ladite solution sur le produit issu du dernier séchage en lit fluide, préalablement introduit dans un granulateur (par exemple celui utilisé auparavant), de préférence un granulateur mélangeur, dans des conditions telles que décrites plus haut.

Selon un second mode de réalisation, très préféré, on additionne, généralement sous agitation, le produit obtenu (support + composé soufré (C)) et du composé (B) solide dans un granulateur (par exemple celui utilisé auparavant), de préférence un granulateur mélangeur, et on pulvérise sur le mélange (généralement sous agitation) dans le granulateur une solution aqueuse du composé (A), en particulier à une pression de pulvérisation comprise entre 5 et 15 bars ; la granulation peut s'effectuer à l'aide d'un granulateur à assiettes ou d'un granulateur de type Logide. La solution aqueuse du composé (A), dont le pH est habituellement compris entre 10 et 14, est en général préalablement chauffée notamment à une température comprise entre 60 et 90 °C, par exemple entre 70 et 85 °C.

De même, si le composé (A) est un silicate de sodium, on emploie en général une solution aqueuse de silicate de sodium telle que définie auparavant.

Cette étape de mélange (pulvérisation en particulier) est de préférence suivie d'un séchage en lit fluide, tel que mentionné précédemment (mais, en général, à une température inférieure (par exemple entre 30 et 40 °C)), puis d'un nouveau mélange avec une solution aqueuse du composé (A), mélange consistant avantageusement en une pulvérisation de ladite solution sur le produit issu de ce demier séchage en lit fluide, préalablement introduit dans un granulateur (par exemple celui utilisé auparavant), de préférence un granulateur mélangeur, dans des conditions telles que décrites plus haut.

Une étape finale de tamisage peut être mise en oeuvre selon la granulométrie souhaitée.

Il est à noter que l'ajoût des composés (A) et (B), suite à l'incorporation du composé soufré (C) au coeur du support, peut éventuellement s'effectuer par la méthode (non préférée) suivante : on additionne au produit obtenu précédemment (support + composé soufré (C)), préalablement introduit dans un réacteur soumis à une agitation, un mélange d'une solution aqueuse du composé (A) et d'une solution aqueuse du composé (B) ; on obtient ainsi une solution ; des granulés sont alors préparés par atomisation de cette solution, à une température par exemple comprise entre 40 et 500 °C ; à cet effet, on peut employer tout type d'atomiseur convenable, notamment un atomiseur du type BUCHI, un atomiseur à turbines, à buses, à pression liquide ou à deux fluides.

Lorsque l'on souhaite préparer un agent ne contenant pas de support, en particulier d'argile, on peut mettre en oeuvre un procédé identique au procédé préféré décrit précédemment pour l'agent contenant un support, en omettant l'étape d'incorporation du composé soufré (C) au coeur du support, et en remplaçant dans l'exposé précédent le produit support + composé soufré (C) par composé soufré (C).

L'utilisation d'au moins un agent selon l'invention pour éliminer des métaux lourds d'un milieu les contenant, notamment d'un effluent (ou solution) liquide, en particulier d'un effluent (ou solution) aqueuse, peut être mise en oeuvre de la manière suivante.

On introduit l'agent dans l'effluent liquide à traiter, sous agitation. Le pH final de la suspension contenant ledit agent qui y a été ajouté est de préférence compris entre 7 et 11 ou ajusté à une valeur comprise entre 7 et 11 par addition préalable d'une base ou d'un acide ; ledit pH peut être en particulier (ajusté) aux environs de 8. Le pH final dépend de la quantité d'agent utilisé selon l'invention introduit dans l'effluent liquide à traiter et du pH initial dudit effluent. On poursuit l'agitation, par exemple pendant 5 à 60 minutes. On peut laisser ensuite reposer (décanter) la suspension, à température ambiante, pendant un certain temps, en général entre 0,5 et 24 heures, notamment entre 0,5 et 6 heures. Le temps de décantation peut être réduit si on utilise des méthodes de décantation rapides connues de l'homme du métier. Puis, on sépare le précipité formé, c'est-à-dire l'agent chargé en métaux lourds, notamment en mercure, par décantation, filtration et/ou centrifugation de la suspension.

Généralement, le milieu à traiter, notamment quand il consiste en un effluent liquide (en particulier un effluent (une solution) aqueux), contient 0,5 à 6000 mg/l, par exemple 1 à 1000 mg/l, notamment 2 à 300 mg/l de métaux lourds.

La quantité d'agent ajouté au milieu à traiter est telle que le rapport molaire (SiO₂+CO₃²⁻)/(cations présents dans le milieu à traiter) soit, en général, compris entre 0,7 et 2,5, par exemple entre 1,0 et 2,2, notamment entre 1,1 et 1,9. On entend ici par cations présents dans le milieu à traiter les cations de métaux lourds et les cations Ca²⁺.

L'utilisation selon l'invention permet, de manière avantageuse, une élimination très efficace des métaux lourds, en particulier du mercure, notamment dans une plage de valeurs de pH assez large, en général entre 7 et 11.

De plus, on constate que, après séparation, le précipité formé, c'est-à-dire l'agent utilisé selon l'invention chargé en métaux lourds, présente de préférence une aptitude satisfaisante à la stabilisation (ou immobilisation). Il présente un comportement très acceptable vis-à-vis de la lixiviation : il est en effet peu lixiviable, c'est-à-dire qu'il ne libère quasiment pas ou peu de cations de métaux lourds qu'il contient lorsqu'il est mis en présence d'eau ; les quantités d'espèces chimiques métaux lourds dans des lixiviats obtenus à partir de tests de lixiviation classiquement réalisés sont relativement faibles.

Si la présence d'un support dans l'agent utilisé selon l'invention permet, en général, une précipitation localisée en périphérie dudit support, elle permet également, en particulier dans le cas de l'argile, de favoriser, de manière surprenante, la décantation, notamment d'augmenter la vitesse de décantation. De même, elle peut également permettre de diminuer les faibles teneurs en métaux lourds des lixiviats tels que mentionnés précédemment. Elle est particulièrement intéressante lorsque l'agent est utilisé notamment en finition, c'est-à-dire pour l'élimination des dernières traces de métaux lourds.

Les exemples suivants illustrent l'invention sans toutefois en limiter la portée.

### EXEMPLE 1

1) 7,5 kg d'argile bentonite, commercialisée par la société Comptoir de Minéraux et Matières Premières sous la référence Absoclay SPV, sont introduits dans un granulateur mélangeur Lodige d'une capacité de 20 litres.
   Après mise en rotation des socs à 100 tours/min, on y introduit, pendant 7 minutes, 1800 ml d'une solution aqueuse à 15 % en poids de trimercapto triazine-S (commercialisé par la société Dégussa sous la référence TMT 15), de densité égale à 1,12 (trimercapto triazine-S sous forme de sel sodique, de masse molaire égale à 243,22 g).
   On récupère des granulés ayant une humidité de 23,4 %.
   Cette masse de granulés est séparée en deux parties égales, chacune d'entre elles étant ensuite séchée indépendamment par passage dans un lit fluide (portant la référence GLATT GPCG3).
2) Lors du séchage en lit fluide, la première partie des granulés subit une montée en température jusqu'à 50 °C ; la température est ensuite maintenue à ce palier de 50 °C pendant 10 minutes, le débit de fluidisation étant fixé à environ 200 m³/h.
   L'humidité finale des granulés ainsi séchés est de 3 %.
   Ces granulés sont soumis ensuite à un broyage à l'aide d'un broyeur FORPLEX, puis à un tamisage à l'issue duquel est récupérée la fraction de granulés de taille inférieure à 200 µm.
3) 2,5 kg desdits granulés récupérés précédemment (à l'issue de 2)) et 4,875 kg de Na₂CO₃ sous forme de poudre sont introduits dans un granulateur mélangeur Lodige d'une capacité de 20 litres ; une homogénéisation des granulés et de la poudre est réalisée à 167 tours/min, pendant 15 minutes.

On pulvérise ensuite sur le mélange se trouvant dans le granulateur mélangeur fonctionnant à la même vitesse (167 tours/min) 4,2 kg d'une solution de silicate de sodium, préalablement chauffée à 75 °C, de rapport molaire SiO₂/Na₂O égal à 2, de concentration en silicate, exprimée en SiO₂, de 30,6 % en poids, à une pression de pulvérisation de 10 bars.

On récupère des granulés (ayant une humidité de 17,9 %) qui sont alors séchés par passage dans un lit fluide (portant la référence GLATT GPCG3) dans les conditions indiquées en 2), excepté le fait que la température est de 35 °C.

L'humidité des granulés ainsi séchés est de 12 %.

On pulvérise enfin sur ces granulés, préalablement réintroduits dans le granulateur mélangeur mis à nouveau en service, 1,650 kg d'une solution de silicate de sodium telle que définie plus haut (soit, au total des deux pulvérisations, 2,650 kg de silicate de sodium sec).

Les granulés obtenus présentent une humidité de 19 %.

On récupère, par tamisage, les granulés ayant une taille comprise entre 0,2 et 1,6mm.

Le produit obtenu (P1) constitué par lesdits granulés comprend environ 49 % de carbonate de sodium, 26 % de silicate de sodium, 24 % d'argile bentonite et 1 % de trimercapto triazine-S.

### EXEMPLE 2

1) 2) Lors du séchage en lit fluide, la seconde partie des granulés (obtenus au point 1) de l'exemple 1) subit une montée en température jusqu'à 90 °C ; la température est ensuite maintenue à ce palier de 90 °C pendant 10 minutes, le débit de fluidisation étant fixé à environ 200 m³/h.
   L'humidité finale des granulés ainsi séchés est de 3 %.
   Ces granulés sont soumis ensuite à un broyage à l'aide d'un broyeur FORPLEX, puis à un tamisage à l'issue duquel est récupérée la fraction de granulés de taille inférieure à 200 µm.
3) 2,5 kg desdits granulés récupérés précédemment (à l'issue de 2)) et 4,875 kg de Na₂CO₃ sous forme de poudre sont introduits dans un granulateur mélangeur Lodige d'une capacité de 20 litres ; une homogénéisation des granulés et de la poudre est réalisée à 167 tours/min, pendant 15 minutes.

On pulvérise ensuite sur le mélange se trouvant dans le granulateur mélangeur fonctionnant à la même vitesse (167 tours/min) 4,2 kg d'une solution de silicate de sodium, préalablement chauffée à 75 °C, de rapport molaire SiO₂/Na₂O égal à 2, de concentration en silicate, exprimée en SiO₂, de 30,6 % en poids, à une pression de pulvérisation de 10 bars.

On récupère des granulés (ayant une humidité de 17,9 %) qui sont alors séchés par passage dans un lit fluide (portant la référence GLATT GPCG3), dans les conditions indiquées en 2), excepté le fait que la température est de 35 °C.

L'humidité des granulés ainsi séchés est de 12 %.

On pulvérise enfin sur ces granulés, préalablement réintroduits dans le granulateur mélangeur mis à nouveau en marche, 1,650 kg d'une solution de silicate de sodium telle que définie plus haut (soit, au total des deux pulvérisations, 2,650 kg de silicate de sodium sec).

Les granulés obtenus présentent une humidité de 18 %.

On récupère, par tamisage, les granulés ayant une taille comprise entre 0,2 et 1,6 mm.

Le produit obtenu (P2) constitué par lesdits granulés comprend environ 49 % de carbonate de sodium, 26 % de silicate de sodium, 24 % d'argile bentonite et 1 % de trimercapto triazine-S.

### EXEMPLE 3

Un effluent aqueux d'eaux de lavage des fumées d'incinération d'ordures ménagères est reconstitué comme suit.

On dissout dans 5 litres de solution aqueuse de chlorure de sodium contenant 200 g de NaCI les quantités suivantes :

| | | | |
|---|---|---|---|
| Na₂SO₄ | 7,390 g | CuCl₂ | 0,067 g |
| CaCl₂,2H₂O | : 18,370 g | CdCl₂ | 0,041 g |
| AlCl₃,6H₂O | 2,235 g | ZnCl₂ | 1,574 g |
| FeCl₃,6H₂O | 1,219 g | PbCl₂ | 0,067 g |
| NiCl₂ | 0,102 g | HgCl₂ | 0,070 g |

Le pH de cet effluent est ajusté à la valeur 2 par ajout d'acide chlorhydrique.

Ledit effluent présente les teneurs suivantes exprimées en mg/l :

| | | | |
|---|---|---|---|
| Ca²⁺ | 1000 | Cu²⁺ | 5 |
| Al³⁺ | 50 | Cd²⁺ | 5 |
| Fe²⁺+ Fe³⁺ | 50 | Zn²⁺ | 150 |
| Ni²⁺ | 5 | Pb²⁺ | 10 |
| | | Hg²⁺ | 10 |

Quatre essais d'élimination des métaux lourds contenus dans cet effluent sont réalisés : chacun des produits P1 et P2 préparés aux exemples 1 et 2 est mis en oeuvre (séparément) pour des pH de neutralisation finaux de 8 et de 9.

Les quantités de produit P1 et P2 à utiliser pour 500 ml dudit effluent sont les suivantes :
P1 : 3,00 g pour un pH final de 8,
   4,34 g pour un pH final de 9,
P2 : 3,33 g pour un pH final de 8,
   4,35 g pour un pH final de 9.

Pour chaque essai, on introduit de manière instantanée, sous agitation, dans 500 ml dudit effluent, la quantité de produit P1 (ou P2) indiquée ci-dessus et on maintient l'agitation pendant 30 minutes.

La suspension obtenue est ensuite laissée au repos, à température ambiante, pendant 4 heures.

Puis elle est centrifugée à 3000 tours/min pendant 10 minutes.

On mesure les concentrations suivantes (tableau 1) en diverses espèces de l'effluent épuré (c'est-à-dire la partie sumageante) par toute méthode appropriée (notamment ICP/MS (spectroscopie d'émission plasma avec détection masse (appareillage utilisé : ELAN 5000, PERKIN ELMER)) pour les éléments Hg, Cd et Pb, et ICP/OES (spectroscopie d'émission plasma avec détection optique (appareillage utilisé : SOPRA DPS 1500)) pour les éléments Ca, Al, Fe, Ni, Cu et Zn).

**TABLEAU 1**

| Espèce | Teneur initiale (mg/l) | Teneur après traitement avec P1 (mg/l) | | Teneur après traitement avec P2 (mg/l) | |
|---|---|---|---|---|---|
| | | ph final : 8 | pH final : 9 | pH final : 8 | pH final : 9 |
| Ca²⁺ | 1000 | 445 | 29 | 365 | 26 |
| Al³⁺ | 50 | <0,2 | <0,2 | <0,2 | <0,2 |
| Fe²⁺+ Fe³⁺ | 50 | <0,1 | <0,1 | <0,1 | <0,1 |
| Ni²⁺ | 5 | 1,2 | 0,2 | 0,5 | 0,4 |
| Cu²⁺ | 5 | <0,2 | <0,2 | <0,2 | <0,2 |
| Cd²⁺ | 5 | 0,07 | 0,20 | 0,06 | 0,40 |
| Zn²⁺ | 150 | <0,3 | <0,3 | <0,3 | <0,3 |
| Pb²⁺ | 10 | <0,05 | 0,05 | <0,05 | 0,11 |
| Hg²⁺ | 10 | <0,02 | 0,05 | 0,02 | 0,07 |

### EXEMPLE 4

1) 3,5 kg de Na₂CO₃ et 100 g de sulfure de baryum sont introduits dans un granulateur mélangeur Lodige d'une capacité de 20 litres ; une homogénéisation du mélange est réalisée à 160 tours/min, pendant 20 minutes.
   On pulvérise ensuite sur le mélange se trouvant dans le granulateur mélangeur fonctionnant à la même vitesse (160 tours/min) 4,0 kg d'une solution de silicate de sodium, préalablement chauffée à 75 °C, de rapport molaire SiO₂/Na₂O égal à 2, de concentration en silicate, exprimée en SiO₂, de 30,6 % en poids, à une pression de pulvérisation de 12 bars.
   On récupère des granulés qui sont alors séchés, pendant 45 minutes, dans un sécheur tournant, à l'aide d'air chaud de telle manière que la température des granulés ne dépasse pas 50 °C.
   Les granulés sont ensuite tamisés (au moyen d'un tamis de 1,6 mm) ; le refus est broyé à l'aide d'un broyeur FORPLEX à broches, équipé d'une grille de 3 mm. Les granulés tamisés et les granulés broyés sont réintroduits dans le granulateur mélangeur.
   On pulvérise enfin sur ces granulés, se trouvant dans le granulateur mélangeur mis à nouveau en service, 2,4 kg d'une solution de silicate de sodium telle que définie plus haut (soit, au total des deux pulvérisations, 2,9 kg de silicate de sodium sec).
   Puis on sèche, comme indiqué précédemment, les granulés obtenus.
   On récupère ensuite, par tamisage, les granulés ayant une taille comprise entre 0,2 et 1,6 mm.
   Le produit obtenu (P3) constitué par lesdits granulés comprend environ 54 % de carbonate de sodium, 44,5 % de silicate de sodium et 1,5 % de sulfure de baryum.

## Revendications

1. Utilisation, pour l'élimination ou la stabilisation de métaux lourds contenus dans un milieu, d'un agent comprenant :
- au moins un composé (A) consistant en un silicate de métal alcalin,
- au moins un composé (B) consistant en un carbonate de métal alcalin ou un hydroxycarbonate choisi parmi l'hydrotalcite ou la dawsonite,
- au moins un composé soufré (C), et
- éventuellement, au moins un support,
le rapport en poids composé (B) / composé (A) étant compris entre 0,5 et 4,0 et la teneur dudit agent en composé soufré (C) étant comprise entre 0,01 et 5 % en poids.

2. Utilisation selon la revendication 1, **caractérisée en ce que** ledit composé (A) est un silicate de sodium ou de potassium.

3. Utilisation selon la revendication 2, **caractérisée en ce que** ledit composé (A) est un silicate de sodium.

4. Utilisation selon l'une des revendications 1 à 3, **caractérisée en ce que** ledit composé (B) est un carbonate de sodium.

5. Utilisation selon l'une des revendications 1 à 4, **caractérisée en ce que** le rapport en poids composé (B) / composé (A) est compris entre 1,1 et 3,5.

6. Utilisation selon l'une des revendication 1 à 5, **caractérisée en ce que** ledit composé (C) est un composé soufré minéral.

7. Utilisation selon la revendication 6, **caractérisée en ce que** le composé soufré (C) est un sulfure minéral, notamment un sulfure de baryum ou de strontium, ou un (poly)thiocarbonate minéral.

8. Utilisation selon l'une des revendication 1 à 5, **caractérisée en ce que** ledit composé (C) est un composé soufré organique.

9. Utilisation selon la revendication 8, **caractérisée en ce que** le composé soufré (C) est un organothiophosphate ou un organodithiophosphate, en particulier un dialkyl- ou diaryl-dithiophosphate de métal alcalin.

10. Utilisation selon la revendication 8, **caractérisée en ce que** le composé soufré (C) est un composé (poly)mercapto.

11. Utilisation selon la revendication 10, **caractérisée en ce que** ledit composé soufré (C) est une triazine, notamment une triazine-S, substituée par 1, 2 ou 3 radicaux monovalents -SH.

12. Utilisation selon la revendication 11, **caractérisée en ce que** ledit composé soufré (C) est la trimercapto triazine-S.

13. Utilisation selon l'une des revendications 8 à 12, caractérisée en que ledit agent comprend au moins un support.

14. Utilisation selon l'une des revendications 1 à 13, **caractérisée en ce que** ledit agent présente une teneur en composé soufré (C) comprise entre 0,1 et 4 % en poids.

15. Utilisation selon l'une des revendications 1 à 14, **caractérisée en ce que** ledit support est une argile.

16. Utilisation selon la revendication 15, **caractérisée en ce que** ladite argile est une montmorillonite ou une bentonite.

17. Utilisation selon l'une des revendications 1 à 16, **caractérisée en ce que** ledit agent présente une teneur en support comprise entre 5 et 90 % en poids, en particulier entre 10 et 35 % en poids.

18. Utilisation selon l'une des revendications 1 à 12 et 14, **caractérisée en ce que** ledit agent ne contient pas de support, en particulier d'argile.

19. Utilisation selon l'une des revendications 1 à 18, **caractérisée en ce que** ledit agent se présente sous forme de granulés.

20. Utilisation selon l'une des revendications 1 à 19, **caractérisée en ce que** lesdits métaux lourds sont choisis parmi le cadmium, le chrome, le cuivre, le mercure, le nickel, le plomb, le zinc et le fer.

21. Utilisation selon l'une des revendications 1 à 20, **caractérisée en ce que** ledit milieu contient au moins du mercure.

22. Utilisation selon l'une des revendications 1 à 21, **caractérisée en ce que** ledit milieu est un effluent aqueux, notamment un effluent aqueux industriel.

23. Utilisation selon la revendication 22, **caractérisée en ce que** ledit milieu est un effluent aqueux formé par les eaux de lavage des fumées d'incinération de déchets.

## Claims

1. Use for the elimination or stabilisation of heavy metals contained in a medium of an agent comprising:
- at least one compound (A) consisting of an alkali metal silicate,
- at least one compound (B) consisting of an alkali metal carbonate or a hydroxycarbonate selected from hydrotalcite or dawsonite,
- at least one sulphur compound (C), and
- optionally, at least one carrier,
the compound (B)/compound (A) ratio by weight being between 0.5 and 4.0 and the content of sulphur compound (C) in said agent being between 0.01 and 5% by weight.

2. Use according to claim 1 **characterised in that** said compound (A) is a sodium or potassium silicate.

3. Use according to claim 2 **characterised in that** said compound (A) is a sodium silicate.

4. Use according to one of claims 1 to 3 **characterised in that** said compound (B) is a sodium carbonate.

5. Use according to one of claims 1 to 4 **characterised in that** the compound (B)/compound (A) ratio by weight is between 1.1 and 3.5.

6. Use according to one of claims 1 to 5 **characterised in that** said compound (C) is a mineral sulphur compound.

7. Use according to claim 6 **characterised in that** the sulphur compound (C) is a mineral sulphide, in particular a barium or strontium sulphide or a mineral (poly)thiocarbonate.

8. Use according to one of claims 1 to 5 **characterised in that** said compound (C) is an organic sulphur compound.

9. Use according to claim 8 **characterised in that** the sulphur compound (C) is an organothiophosphate or an organodithiophosphate, in particular a dialkyl- or diaryl-dithiophosphate of an alkali metal.

10. Use according to claim 8 **characterised in that** the sulphur compound (C) is a (poly)mercapto compound.

11. Use according to claim 10 **characterised in that** said sulphur compound (C) is a triazine, in particular an S-triazine, substituted by 1,2 or 3 monovalent-SH radicals.

12. Use according to claim 11 **characterised in that** said sulphur compound (C) is trimercapto S-triazine.

13. Use according to one of claims 8 to 12 **characterised in that** said agent comprises at least one carrier.

14. Use according to one of claims 1 to 13 **characterised in that** said agent has a content of sulphur compound (C) of between 0.1 and 4% by weight.

15. Use according to one of claims 1 to 14 **characterised in that** said support is a clay.

16. Use according to claim 15 **characterised in that** said clay is a montmorillonite or a bentonite.

17. Use according to one of claims 1 to 16 **characterised in that** said agent has a content of carrier of between 5 and 90% by weight, in particular between 10 and 35% by weight.

18. Use according to one of claims 1 to 12 and 14 **characterised in that** said agent does not contain any carrier, in particular clay.

19. Use according to one of claims 1 to 18 **characterised in that** said agent is in the form of granules.

20. Use according to one of claims 1 to 19 **characterised in that** said heavy metals are selected from cadmium, chromium, copper, mercury, nickel, lead, zinc and iron.

21. Use according to one of claims 1 to 20 **characterised in that** said medium contains at least mercury.

22. Use according to one of claims 1 to 21 **characterised in that** said medium is an aqueous effluent, in particular an industrial aqueous effluent.

23. Use according to claim 22 **characterised in that** said medium is an aqueous effluent formed by the washing waters from waste incineration fumes.

## Patentansprüche

1. Verwendung eines Mittels, enthaltend
- mindestens eine Verbindung (A) aus einem Alkalimetallsilikat,
- mindestens eine Verbindung (B) aus einem Alkalimetallcarbonat oder einem Hydroxycarbonat, ausgewählt aus Hydrotalcit oder Dawsonit,
- mindestens eine Schwefelverbindung (C) und
- gegebenenfalls mindestens einen Träger,
zur Entfernung oder Stabilisierung von in einem Milieu enthaltenen Schwermetallen,
wobei das Gewichtsverhältnis von Verbindung (B) / Verbindung (A) zwischen 0,5 und 4,0 liegt und der Gehalt des Mittels an der Schwefelverbindung (C) zwischen 0,01 und 5 Gew.-% liegt.

2. Verwendung nach Anspruch 1, **dadurch gekennzeichnet, daß** die Verbindung (A) ein Natrium- oder Kaliumsilikat ist.

3. Verwendung nach Anspruch 2, **dadurch gekennzeichnet, daß** die Verbindung (A) ein Natriumsilikat ist.

4. Verwendung nach einem der Ansprüche 1 bis 3, **dadurch gekennzeichnet, daß** die Verbindung (B) ein Natriumcarbonat ist.

5. Verwendung nach einem der Ansprüche 1 bis 4, **dadurch gekennzeichnet, daß** das Gewichtsverhältnis von Verbindung (B) / Verbindung (A) zwischen 1,1 und 3,5 liegt.

6. Verwendung nach einem der Ansprüche 1 bis 5, **dadurch gekennzeichnet, daß** die Verbindung (C) eine anorganische Schwefelverbindung ist.

7. Verwendung nach Anspruch 6, **dadurch gekennzeichnet, daß** die Schwefelverbindung (C) ein anorganisches Sulfid, insbesondere Barium- oder Strontiumsulfid, oder ein anorganisches (Poly-)Thiocarbonat ist.

8. Verwendung nach einem der Ansprüche 1 bis 5, **dadurch gekennzeichnet, daß** die Verbindung (C) eine organische Schwefelverbindung ist.

9. Verwendung nach Anspruch 8, **dadurch gekennzeichnet, daß** die Schwefelverbindung (C) ein Organothiophosphat oder ein Organoditiophosphat, insbesondere ein Alkalimetalldialkyl- oder -diaryldithiophosphat ist.

10. Verwendung nach Anspruch 8, **dadurch gekennzeichnet, daß** die Schwefelverbindung (C) eine (Poly-)Mercaptoverbindung ist.

11. Verwendung nach Anspruch 10, **dadurch gekennzeichnet, daß** die Schwefelverbindung (C) ein Triazin, insbesondere ein S-Triazin, das mit 1, 2 oder 3 einwertigen Resten -SH substituiert ist, ist.

12. Verwendung nach Anspruch 11, **dadurch gekennzeichnet, daß** die Schwefelverbindung (C) Trimercapto-S-triazin ist.

13. Verwendung nach einem der Ansprüche 8 bis 12, **dadurch gekennzeichnet, daß** das Mittel mindestens einen Träger umfaßt.

14. Verwendung nach einem der Ansprüche 1 bis 13, **dadurch gekennzeichnet, daß** das Mittel einen Gehalt an der Schwefelverbindung (C) von 0,1 bis 4 Gew.-% aufweist.

15. Verwendung nach einem der Ansprüche 1 bis 14, **dadurch gekennzeichnet, daß** der Träger ein Ton ist.

16. Verwendung nach Anspruch 15, **dadurch gekennzeichnet, daß** der Ton ein Montmorillonit oder ein Bentonit ist.

17. Verwendung nach einem der Ansprüche 1 bis 16, **dadurch gekennzeichnet, daß** das Mittel einen Gehalt an Träger von 5 bis 90 Gew.-%, insbesondere zwischen 10 und 35 Gew.-%, aufweist.

18. Verwendung nach einem der Ansprüche 1 bis 12 und 14, **dadurch gekennzeichnet, daß** das Mittel keinen Träger, insbesondere keinen Ton, enthält.

19. Verwendung nach einem der Ansprüche 1 bis 18, **dadurch gekennzeichnet, daß** das Mittel in Form eines Granulats vorliegt.

20. Verwendung nach einem der Ansprüche 1 bis 19, **dadurch gekennzeichnet, daß** die Schwermetalle ausgewählt sind aus Cadmium, Chrom, Kupfer, Quecksilber, Nickel, Blei, Zink und Eisen.

21. Verwendung nach einem der Ansprüche 1 bis 20, **dadurch gekennzeichnet, daß** das Milieu mindestens Quecksilber enthält.

22. Verwendung nach einem der Ansprüche 1 bis 21, **dadurch gekennzeichnet, daß** das Milieu wäßriges Abwasser, insbesondere wäßriges industrielles Abwasser, ist.

23. Verwendung nach Anspruch 22, **dadurch gekennzeichnet, daß** das Milieu ein wäßriges Abwasser ist, das aus Waschwässern zur Wäsche von Rauchgasen aus der Verbrennung von Abfällen gebildet ist.
